# EUROPEAN PATENT SPECIFICATION

(11) **EP 0 544 383 B1**
(45) Date of publication and mention of the grant of the patent: **08.05.1996**
(21) Application number: 92301115.9
(22) Date of filing: 11.02.1992
(51) Int. Cl.: F16L 59/02, B65H 81/08

(54) **Method of manufacturing a heat insulation pipe body**
Verfahren zum Herstellen eines wärmeisolierten Rohres
Procédé pour la fabrication d'une conduite isolée thermiquement

(30) Priority: 26.11.1991 JP 337543/91
(43) Date of publication of application: 02.06.1993
(73) Proprietor: DAIDO HOXAN INC., Sapporo-city (JP)
(72) Inventor: Yoshino, Akira, Osakasayama-shi, Osaka 589 (JP)
(74) Representative: Marlow, Nicholas Simon

(56) References cited:
- GB-A- 887 345
- US-A- 2 291 823
- US-A- 3 005 742
- US-A- 3 401 073

## Description

This invention relates to a method of manufacturing a heat insulation pipe body.

A heat insulation pipe body is used for various heat insulation pipings. For example, a vacuum thermal insulation duplex pipe is used for liquid transferring pipes and the like through which fluid at ultra low temperature, such as liquid nitrogen, is transferred. The heat insulated pipe body forms an internal pipe for the heat insulation duplex pipe. On the periphery of such a pipe body, strip aluminum foil and Dexter paper (asbestos paper) are wound alternately in a multi-layered structure. Generally it is manufactured as follows. Aluminum foil and Dexter paper are firstly overlappingly wound around the periphery of a pipe body in two layers. A plurality of the overlapped layers is formed on the periphery of the pipe body to cover the pipe body and give a heat insulation pipe body.

However, if the above-mentioned insulation pipe body is manufactured under a high moisture atmosphere, the Dexter paper becomes highly water rich by absorbing water from air during winding since the paper used as an insulator of the insulation pipe body has a high water absorption.

Accordingly, there is a disadvantage that during evacuation of the space between an internal pipe and external pipe in the process of manufacturing the vacuum heat insulation duplex pipe, the water content is a resistance to evacuation and it takes a long time to evacuate.

A heat insulator wherein a ceramic particle scattered layer is formed on one side of metallic foil, instead of a conventional heat insulator comprising aluminium foil and Dexter paper, in order to exclude water absorption property of such known heat insulators, was filed as a Japanese Utility Model Application No. 2-106483. A thermal insulation pipe body using this heat insulator is manufactured in the following manner. Ceramic particles are scattered on the surface of one side of metallic foil by flame spraying to form a thermal insulator, and the thermal insulator is wound and overlapped onto the periphery of a pipe body as well as a conventional insulator to cover the pipe body with this overlapped layer. However, in this manner, since it is required to scatter ceramic particles on a surface of the metallic foil by flame spraying prior to overlapping the insulator on the peripheral surface of the pipe body, it is impossible to simultaneously perform a series of operations such as scattering the ceramic particles and then overlapping the ceramic particle scattered metallic foil on the pipe body to produce the insulation pipe body continuously. Therefore, development of a method for manufacturing the heat insulation pipe body continuously is strongly desired.

GB887,345 discloses a flexible heat-insulating material comprising an assembly of separate superimposed metallic layers not exceeding 0.2mm in thickness, each having on at least one face thereof a compact film of metal oxide adhering to the metal. A strip of metal oxidised on one or both faces may be wound in a coil about an article to be insulated.

Accordingly, the present invention can provide a method in which a thermal insulation pipe body can be manufactured continuously.

The method of manufacturing a heat insulation pipe body according to the invention comprises placing a removable dummy pipe on one end of a pipe, helically winding a strip of metallic foil around the dummy pipe and then around the pipe to cover their peripheries and simultaneously spraying ceramic particles onto the newly wound part of the strip. The pitch of the helix is such that successive turns of the strip overlap thereby providing a ceramic particle layer between wound layers of metallic foil.

That is, in the method according to the invention, the winding of the strip of metallic foil around the pipe body and the forming of the ceramic particle dotted layer on the surface of the strip can be done simultaneously because while the strip is wound around the pipe body from one end of the strip, ceramic particles are flame sprayed on the wound part to form a ceramic particle scattered layer. A part of metallic strip spaced from the said one end of the strip is then wound onto the strip with the particle layer already formed and at the same time ceramic particles are flame sprayed on the newly wound part of the strip. These steps are repeated to overlap predetermined turns or rolls of the ceramic particle scattered strip of metallic foil having the ceramic particle scattered layer therebetween. In this way, it is possible to achieve a predetermined number of turns or rolls around the periphery of a pipe body, flame-spraying ceramic particles and winding metallic foil simultaneously. Accordingly, it is possible to manufacture an insulation pipe body continuously.

The present invention is described in detail.

In the method of manufacturing an insulation pipe body according to the present invention, a pipe body, at least one removable dummy pipe, a strip of metallic foil and ceramic particles applied thereto by flame spraying are mainly used.

As the pipe body, various cylindrical articles such as a metallic piping, synthetic resin piping and synthetic resin piping of which the surface is metal-sputtered or-plated may be used.

The metallic foil wound onto the pipe body is not particularly limited. Various kinds of metallic foil may be used. The foil thickness should be 5 to 1000 um,preferably 10 to 100 um, more preferably 5 to 30 um. Among the various kinds of metallic foil, one having high fusion temperature and good radiant efficiency gives good results. Stainless steel foil, copper foil or nickel foil are particularly suitable.

As the above-mentioned ceramic particles, particles of ceramic material such as forsterite (2MgO . SiO₂), magnesia (MgO) and alumina (Al₂O₃) may be used. They may be used alone or in combination. The ceramic particles are formed, in fact, by flame spraying raw material onto the periphery of the strip of metallic foil. Each ceramic particle formed is applied to the metallic foil spaced from adjacent ceramic particles. The diameter of thus formed ceramic particles is generally about 5 to 50 um, and the thickness of the ceramic particle dotted layer fromed on the strip of metallic foil by flame spraying is about the same as the particle diameter. The spacing between adjacent particles is set at about 10 to 2000 um. Preferably, the diameter of the ceramic particle is 5 to 30 um and the spacing between adjacent particles is 10 to 200 um.

A heat insulation pipe body is manufactured using the above-mentioned materials as follows, for example. The wound part of metallic foil is flame sprayed with ceramic particles by a conventionally known flame spray gun whilst the strip of metallic foil is wound onto a removable dummy pipe and then a pipe body from one end of the strip to form a ceramic particle dotted layer. Helical winding of the strip, with a low pitched helix, overlaps the strip of metallic foil. Ceramic particles are flame sprayed on the wound foil to form a ceramic particle dotted layer newly and continuously. By repeatedly winding the strip of metallic foil and forming the ceramic particle scattered layer on the wound part, a heat insulation layer with the required number of rolls wound around the pipe body (comprising of the strip of metallic foil overlapped helically and the ceramic particle dotted layer formed between each wound layer) is formed. Thus the heat insulation pipe body can be manufactured continuously

The helical winding of the strip of metallic foil leaves exposed some particles which have been scattered onto the wound strip. These particles may be left exposed. Alternatively, they may be covered, for example by placing the insulation pipe body inside an outer cover made of thin stainless steel plate. A thin-walled tube of stainless steel may be longitudinally sliced open to allow insertion of the insulation pipe body, after which the tube is resealed.

### BRIEF DESCRIPTION OF THE DRAWINGS

Fig. 1 is a top view of an apparatus for carrying out the method of the invention;
Fig. 2 is a cross sectional view illustrating a pipe body with a fixing band;
Fig. 3 (a) shows a partial cross-sectional view showing the structure of a vacuum heat insulation duplex pipe.

This invention is now described in detail with reference to the drawings.

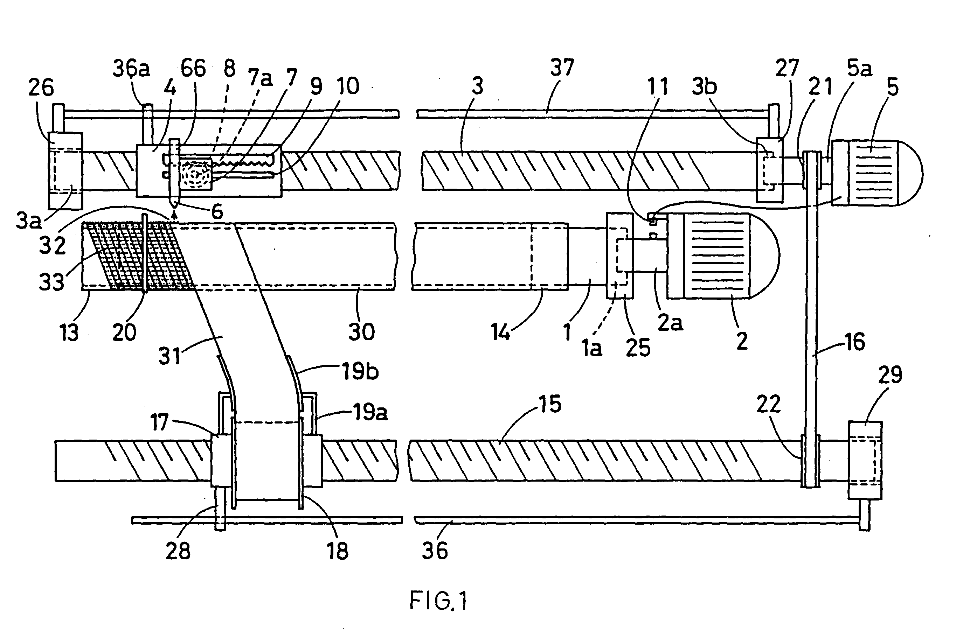

Referring to Fig. 1 the reference numeral 1 is a mandrel for fitting into and holding a pipe body 30. To one side of the mandrel 1 is a first threaded shaft 15 having a reel of stainless steel foil 18, and to another side is a second threaded shaft 3 with a flame spray nozzle 6.

The pipe body 30 is removably fitted onto the mandrel 1. A left ring body (a left dummy body) 13 is disposed adjacent to the left end of the pipe body 30 and a right ring body (a right dummy body) 14 is disposed adjacent to the right end of the pipe body 30. Both ring bodies 13, 14 are fitted removably on the mandrel 1. An output shaft 2a of a motor 2 is connected to a right end part 1a of the mandrel 1 with a connecting member 25 to rotate the mandrel 1.

The first threaded shaft 15, located to one side of the mandrel 1, is rotatably supported at one end by a supporting base 29. The first threaded shaft 15 is rotated by a motor 5 and a drive belt 16. The motor 5 also rotates the second threaded shaft 3. The reference numerals 21 and 22 represent pulleys. A reel supporter 17 is moveably disposed along the first threaded shaft 15 with a screw mechanism. Describing in more detail, a first guiding arm part 28 having a slidable opening (not shown) protrudes from the reel supporter 17. A first guiding bar 36 extends along the first threaded shaft 15 from the supporter 29 and is inserted into the slidable opening. Because of this, rotation of the reel supporter 17 together with the first threaded shaft 15 is prevented and the reel supporter 17 moves axially along the first threaded shaft 15 by the rotation of the shaft 15. A reel 18, on which is wound stainless steel foil 31 having width of 300mm, is rotatably and removably fitted on the reel supporter 17. In this case, a nail body (not shown) for braking is disposed on the circumferential wall of the reel supporter. The nail body performs a brake action by press-contacting an inside circumferential surface of a cylindrical part of the reel 18 to provide resistance to the pulling out of the stainless steel foil 31. A U-shaped supporting part 19a protrudes from the reel supporter 17 to support and fix a flat guide plate 19b. Both sides of the guide plate 19b are shaped to transfer stainless steel foil 31 drawn from the reel 18 obliquely toward the mandrel 1, where the stainless steel foil 31 is wound onto the periphery of the pipe body 30 and right and left ring bodies 13, 14 fitted on the mandrel 1, with an inclined angle of the guide part 19b. A left end part 3a of the second threaded shaft 3 located to another side of the mandrel 1 is rotatably supported by a supporter 26 and a right end part 3b is connected to and supported by an output shaft 5a of the motor 5 with a supporter 27. The second threaded shaft 3 has a flame spraying gun supporter 4 which can move along the second threaded shaft 3 with a screw mechanism. A second guiding arm part 36a having an slidable opening (not shown) protrudes from the flame spray gun supporter 4, and a second guiding bar 37 fixed to left and right supporters 26, 27 passes through the opening. With this structure, co-rotation of the second threaded shaft 3 and the flame spray gun supporter 4 is prevented and the flame spray gun supporter 4 moves along the second threaded shaft 3 by the rotation of the shaft 3. A case 7 in which a motor (not shown) is vertically housed is disposed on the flame spray gun supporter 4 so that it is movable along the longitudinal direction of the flame spray gun supporter 4. A flame spray gun 66 having a flame spray nozzle 6 is mounted on the case 7 as shown in the figure. Describing in detail, a guide bar (not shown) is hung from the bottom of the case 7 and engages a guide groove 10 disposed longitudinally on the spray gun supporter 4. Steps are formed longitudinally on left and right wall surfaces of the guide groove 10 and the bottom end of the guide bar is engaged with the steps to prevent it slipping off. A pinion 8 is fixed at the output shaft 7a of the motor housed in the case 7 so as to be engaged with a rack 9 disposed longitudinally on the flame spray gun supporter 4. The motor is arranged to repeat a normal rotation and reverse rotation at a certain period. Therefore, when the motor is started, the pinion 8 repeats normal rotation and reverse rotation alternately via the output shaft 7a, whereby the case 7 having the motor therein reciprocates along the rack 9 in right and left directions at a certain period.

A control section of the motor 5 driving the second threaded shaft 3 is electrically connected with a sensor 11 disposed at the motor 2 for driving the mandrel 1 to rotate simultaneously with the motor 2.

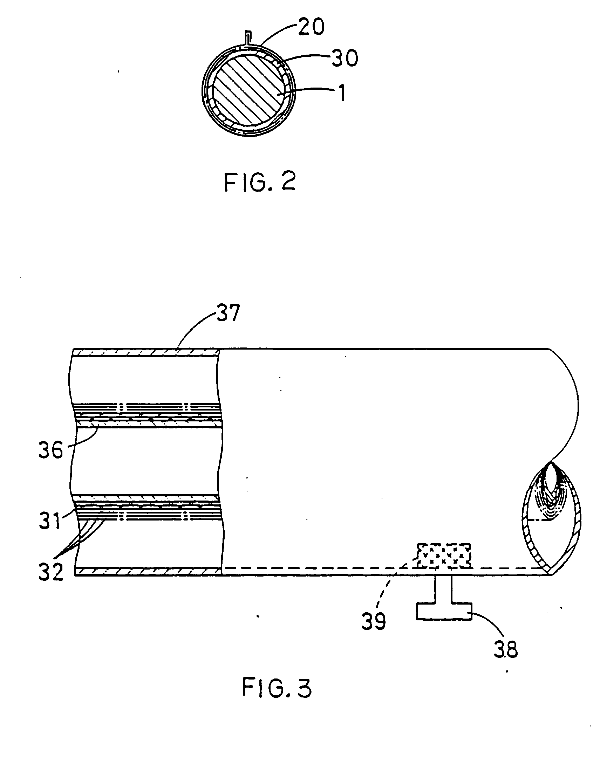

A heat insulation pipe body can be manufactured by a method mentioned below using such an apparatus. At first, a pipe body 30 is fitted on the mandrel 1 and right and left dummy ring bodies 13, 14 are also fitted on the mandrel 1. After winding stainless steel foil 31 around the reel 18, the reel 18 is disposed at the reel supporter 17 of the first threaded shaft 15. Then one end of the stainless steel foil 31 is drawn from the reel 18 and is spot welded onto the periphery of the left dummy ring body 13. In that state, motors 2 and 5 are rotatingly driven and at the same time the motor for driving the flame spray nozzle 6 is started. The mandrel 1 is thereby rotated counterclockwise and with the rotating power, stainless steel foil 31 is drawn from the reel 18 to gradually wind onto the periphery of the left dummy ring body 13. At this time, the flame spray nozzle 6 moves reciprocally left and right (scanning left and right) by the action of the motor in the case 7 so that the nozzle 6 crosses the wound foil to flame spray ceramic particles 32 on the wound foil in a scattered or dotted fashion. A ceramic particle dotted layer 33 is thus formed. Rotation of the threaded shaft first 15 by rotation of the motor 5 via the belt 16 causes the reel supporter 17 to gradually move to the right as shown in the Fig. Stainless steel foil 31 is wound around the body in a helix with a small pitch, the point of application of the foil gradually moving along the mandrel (towards the right hand end as shown in the figure). In order to correspond to the helical winding, the flame spray gun supporter 4 disposed with the nozzle 6 moves along the second threaded shaft 3 an amount corresponding to the movement of the stainless steel foil 31 along the first threaded shaft 15. This movement of the flame spray gun supporter 4 is satisfactorily achieved because a control part of the motor 5 for driving the second threaded shaft 3 receives output signals of a sensor 11 of the motor 2 for driving the mandrel 1, and the rotation of the motor 5, and thus rotation speed of the second threaded shaft 3, is controlled. In this way, the stainless steel foil 31 is wound onto the periphery of each of the left ring body 13, the pipe body 30, and the right ring body 14, in that order, whilst receiving a flame spray of ceramic particles 32. In this case, the winding or turn number of the foil 31 is set at 30. If the foil 31 is wound directly around the pipe body 30, the winding number does not reach 30 because the foil 31 is helically wound leaving exposed pipe body at each end. Because of this the dummy ring bodies 13, 14 are disposed at left and right ends of the pipe body 30. The film is wound initially around the left ring body 13 and finally around the right ring body 14. This allows for the wound foil 31 to make 30 turns around the pipe body 30. A band 20 for preventing unwinding is applied at at least one predetermined interval as shown in Fig. 2 around the periphery of the stainless steel foil 31 wound onto the pipe body 30. This fixes the stainless steel foil 31. Finally, the wound layer of the foil 31 is cut at the borders of the pipe body 30 and dummy ring bodies 13, 14 respectively, and the pipe body 30 covered with the overlapped layer of the stainless steel foil 31 is taken off the mandrel 1. Thus the objective heat insulation pipe body is obtained.

In the above-mentioned example, the mandrel 1 is fixed and the flame spray gun supporter 4 and the reel supporter 17 are moved, but it may be reversed.

Using the heat insulation pipe body thus obtained, a vacuum heat insulation dual pipe as shown in Fig. 3 can be manufactured as follows. An external pipe 37 is fitted around the outermost layer of the heat insulation pipe body 36 leaving some space from the outermost layer. In that arrangement, the space between the external pipe 37 and the insulation pipe body 36 is sealed. Then, the space is evacuated to high vacuum (less than 10⁻⁴ Torr) from an exhaust pipe 38. With this method, a vacuum heat insulation duplex pipe can be manufactured. In the figure the reference numeral 39 is a filter disposed with the exhaust pipe 38.

As mentioned above, in the method of manufacturing an insulation pipe body according to the present invention, the wound part of metallic foil is flame sprayed with ceramic particles to form a ceramic particle dotted layer whilst the strip of metallic foil is wound around the periphery of a pipe body. Winding the strip of metallic foil around the periphery of the pipe body and forming the ceramic particle scattered layer on the surface of one side of the strip of metallic foil can be performed simultaneously. Around the metallic foil with the ceramic particle scattered layer, a strip of metallic foil is wound and at the same time ceramic particles are flame sprayed on to the newly wound part. These steps are repeated to overlap the strip metallic foil with the required number of turns having the ceramic particle scattered layer therebetween. With the method of this invention, it is possible to wind metallic foil a required number of turns around the periphery of the pipe body with flame spraying ceramic particles and winding metallic foil simultaneously. Therefore, the insulation pipe body can be manufactured continuously.

## Claims

1. A method for producing a thermally insulated pipe comprising placing a removable dummy pipe on one end of a pipe, helically winding a strip of metallic foil around the dummy pipe and then around the pipe to cover their peripheries and simultaneously spraying ceramic particles onto the newly wound part of the strip, the pitch of the helix being such that successive turns of the strip overlap thereby providing a ceramic particle layer between wound layers of metallic foil.

2. A method according to claim 1 in which a second removable dummy pipe is initially placed on the other end of the pipe, and the strip is wound around a dummy pipe, the pipe itself and then the other dummy pipe to ensure coverage of entire periphery of the pipe with foil.

3. A method according to claim 1 or 2 in which at least one band is placed around the wound foil to hold it in place.

## Patentansprüche

1. Verfahren zum Herstellen eines wärmeisolierten Rohres umfassend:
Plazieren eines entfernbaren Hilfsrohres an einem Ende des Rohres, schraubenförmiges Winden eines Metallfolienstreifens um das Hilfsrohr und dann um das Rohr, um ihre Außenflächen zu bedecken, und gleichzeitiges Sprühen von Keramikpartikeln auf den neu gewundenen Teil des Streifens, wobei die Steigung der Schraubenlinie derart ist, daß aufeinanderfolgende Windungen des Streifens einander überlappen, damit eine Keramikpartikelschicht zwischen gewundenen Schichten der Metallfolie gebildet wird.

2. Verfahren nach Anspruch 1, bei welchem anfänglich ein zweites entfernbares Hilfsrohr am anderen Ende des Rohres angeordnet und der Streifen um ein Hilfsrohr, das Rohr selbst und dann das andere Hilfsrohr gewunden wird, um die Bedeckung der ganzen Außenfläche des Rohres mit Folie sicherzustellen.

3. Verfahren nach Anspruch 1 oder 2, bei welchem mindestens ein Band um die gewundene Folie angeordnet wird, um sie am Platz zu halten.

## Revendications

1. Un procédé pour la fabrication d'une conduite isolée thermiquement comprenant le placement d'une fausse conduite amovible sur une extrémité d'une conduite, l'enroulement de façon hélicoïdale d'une bande de feuille métallique autour de la fausse conduite et ensuite autour de la conduite pour recouvrir leurs périphéries, et la projection simultanée de particules de céramique sur la partie nouvellement enroulée de la bande, le pas de l'hélice étant tel que les tours successifs du recouvrement de la bande créent de ce fait une couche de particules de céramique entre les couches enroulées de la feuille métallique.

2. Un procédé suivant la revendication 1, dans lequel une deuxième fausse conduite amovible est initialement placée sur l'autre extrémité de la conduite, et la bande est enroulée autour d'une fausse conduite, de la conduite elle-même et ensuite de l'autre fausse conduite pour assurer le recouvrement de la périphérie entière de la conduite avec la feuille.

3. Un procédé suivant la revendication 1 ou 2, dans lequel au moins une bande est placée autour de la feuille enroulée pour maintenir celle-ci en place.
